Europäisches Patentamt

(19) European Patent Office

Office européen des brevets

(11) Publication number: **0 296 091**
**A2**

(12) **EUROPEAN PATENT APPLICATION**

(21) Application number: 88500058.8

(22) Date of filing: 13.06.88

(51) Int. Cl.⁴: **B 62 B 9/08**

(30) Priority: 17.06.87 ES 8702057

(43) Date of publication of application:
21.12.88 Bulletin 88/51

(84) Designated Contracting States:
AT BE CH DE FR GB GR IT LI LU NL SE

(71) Applicant: JANE, Sociedad Anonima
Cartagena 203
E-08013 Barcelona (ES)

(72) Inventor: Jane Cabagnero, Ramon
c/o Jané, S.A. Cartagena 203
E-08013 Barcelona (ES)

(74) Representative: Pastells Teixido, Manuel
c/o PASTELLS TEIXIDO, S.L. Pau Claris 138, 5-1a
E-08009 Barcelona (ES)

(54) Brake, suspension and wheel locking unit for baby carriages.

㉗ A brake, suspension and wheel locking unit for baby
carriages, of the type comprising a terminal bracket (1) on the
frame members (2) to which the support (11) of the shaft (12) of
wheels (13) is pivotably mounted and which comprises a
pivoted brake lever (10) and a suspension spring (20) between
said terminal bracket (1) and shaft support (11), the object of
this invention being to provide on the four frame members of
the carriage a unit comprising: the terminal bracket (1) for the
frame members, a locking arm (5) pivotably mounted to said
bracket and locking a finger (14) which is an extension of the
wheel holder support (11), which is pivotably mounted to a
projection (9) of a bushing (8) rotatably mounted on the
terminal bracket (1), to which projection (9) there is also
pivotably mounted an angle brake lever (10) extended by one of
the arms thereof forming a pedal (17), the rotatable bushing (8)
being connected at the bottom thereof with the wheel holder
support (11) by way of the suspension spring (20).

Fig. 1

EP 0 296 091 A2

## Description

## Brake, suspension and wheel locking unit for baby carriages

The invention relates to a brake, suspension and wheel locking unit for baby carriages.

Generally, baby carriages and baby pushchairs are provided on the rear wheels thereof with the assembly of the carriage suspension and a brake lever, there being provided for this purpose a unit having both functions. Recently, such carriages have been provided with self-orientating front wheels facilitating a change of direction with the carriage in movement.

The latest models of baby carriages are provided with a handlebar which may occupy two positions, to push the carriage with the child facing forwards or backwards, i.e. facing the persons pushing the carriage. In this case, with the change of position of the handlebar, the self-orientating wheels are in the rear position and, on the other hand, the suspension and brake levers are on the wheels now forming the front wheels, out of the reach of the person pushing the carriage.

To overcome these drawbacks, this new brake and suspension unit which also incorporates the self-orientating assembly of the wheels has been devised. This unit is installed on the front wheels and on the rear wheels, whereby there is the suspension and brake on four wheels, or on the four pairs of wheels in the case of twin wheels, the self-orientating assembly of the wheels comprising a locking device allowing the wheels located in the rear position of the carriage during use to be fixed in one position, said device associating the wheels on one side of the carriage with those on the other side so that the front or rear wheels may be automatically locked or released with a single operation.

This new unit comprises, on the terminal bracket of the frame members holding the wheels, the assembly of a locking arm which is urged by a spring to a raised inactive position. To the terminal bracket there is connected a freely rotatable bushing having a lateral projection to which the brake lever and the wheel shaft support are pivotably mounted, said support extending upwardly in form of a finger to be engaged by a hollow of the locking arm in the lower active position thereof, whereby the freely rotatable wheel holder support is locked in one position.

The brake lever has one of its arms extended upwardly forming a pedal for operation thereof and the other forked arm is provided at the ends thereof with respective locking pins for the two active and inactive positions of the brake on being inserted in the orifices of the wheel shaft support, said support being associated at the bottom thereof with the freely rotatable bushing by way of the suspension spring.

These and other features will become evident from the following detailed description, which, to facilitate the understanding thereof, is accompanied by two sheets of drawings wherein there is illustrated one embodiment given only as a non limitative example of the scope of the invention.

In the drawings:

Figure 1 is an elevation cross-section view of the brake, suspension and locking unit for the front wheels, with the wheels locked in position;

Figure 2 is also an elevation cross-section view of said unit for the rear wheels, released for free orientation; and

Figure 3 is a perspective view of the wheels of one side of a baby carriage, the front wheels released directionally and the rear wheels locked, showing in exploded view the fairing which may be fitted on the crossbars at the area of the rear wheels.

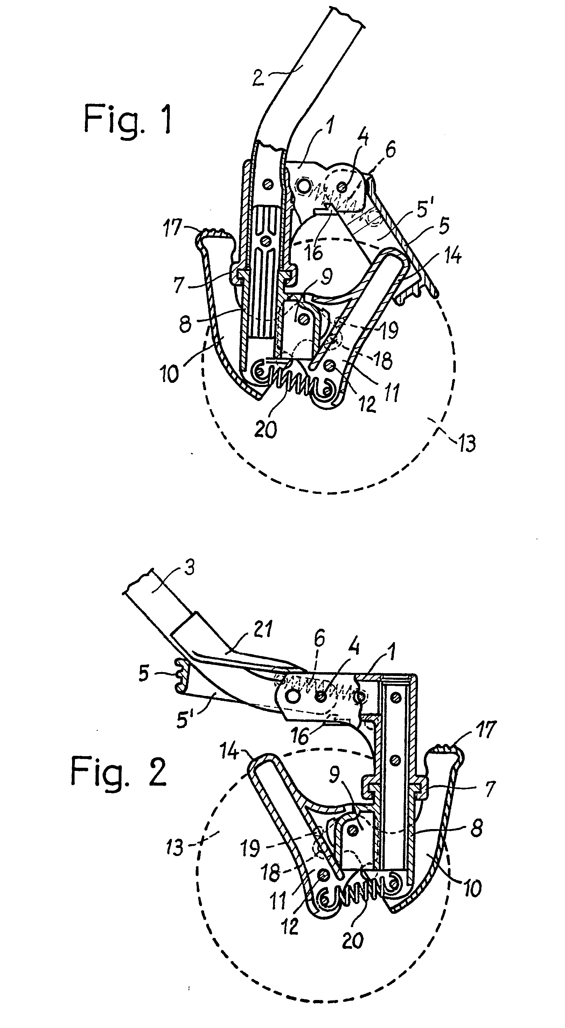

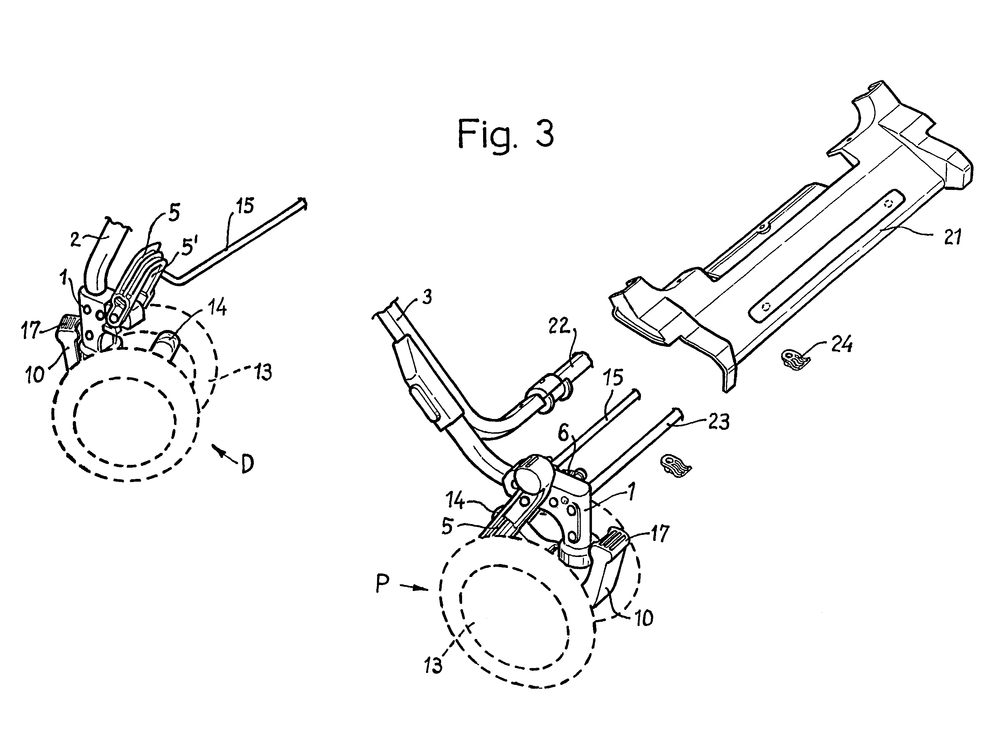

As shown in the drawings, this brake, suspension and wheel locking unit for baby carriages and pushchairs comprises an angle terminal bracket 1 attached to the front frame members 2 and the rear frame members 3. The bracket has pivotably mounted at the top thereof by a shaft 4 a locking arm 5 which is urged by a spring 6 retaining it in a stable raised inactive position (Figure 2 and front wheels in Figure 3).

The vertically tubular terminal brackets 1 are terminated at the lower end thereof with a circular widened portion 7 forming a guide for the freely rotatable coupling of a bushing 8 provided with a lateral projection 9 to which a brake lever 10 and the support 11 of the shaft 12 of the wheels 13 are pivotably mounted. Said support extends upwardly forming a finger 14 which is engaged by a hollow 5' of the locking arm 5 in the lower active position of the latter (Fig. 1, and rear wheels in Fig. 3) so as to lock the freely rotatable wheel support 11 in one position.

The locking arms 5 on both sides of the carriage are connected together by a crossbar 15 (Fig. 3) so that when one of them is operated with the foot the locking arm on the other side is also operated. These locking arms in the lower active position thereof abut protuberances 16 of the terminal brackets 1 of the frame members.

The brake lever 10 is generally U-shaped and is angled with one of its arms extending upwardly forming a pedal 17 to facilitate operation with the foot, while the other shorter arm is semielastic and forked and provided with respective pins 18 in the sides of the end thereof for locking the brake in the active and inactive positions on being inserted selectively in respective pairs of orifices 19 of the wheel shaft support 11. The brake levers are of the type which are provided at the sides thereof with respective external bosses entering between projections on the inner surface of the wheels.

The wheel supports 11 are associated at the bottom end thereof with the freely rotatable bushing 8 by way of a spring 20 acting as suspension.

As an accessory there is a fairing member 21 which may be fitted over the lower end of the rear frame members and over the crossbar 22 which connects the said frame members and crossbar 23 which connects the terminal brackets, said fairing member being held in position by screws and by two clamps 24 to said crossbars.

As illustrated in figure 3, the brake, suspension and locking unit of the invention is arranged for pushing the carriage in its normal position with the handlebar in the rear position and with the child facing forwards. When it is desired to change the handlebar to push the carriage with the child facing backwards towards the person pushing the carriage, then the front wheels D will be locked in position by lowering the locking arms 5 by foot and releasing also with the foot the locking arms of the rear wheels P which now become freely orientatable front wheels.

## Claims

1.- A brake, suspension and wheel locking unit for baby carriages, comprising a terminal bracket (1) on the frame members (2) on which the wheel (13) shaft (12) support (11) is pivotably mounted and which comprises a pivotably mounted brake lever (10) and a suspension spring (20) between said terminal bracket and shaft support, characterized essentially in that the terminal bracket (1) of the frame members (2) comprises the pivotable mounting of a locking arm (5) which is urged by spring (6) holding it in a raised stable inactive position, to which terminal bracked (1) there is freely rotatably mounted a bushing (8) provided with a lateral projection (9) to which the brake lever (10) and the wheel shaft support (11) are pivotably mounted, said support extending upwardly in a finger (14) which engages a hollow (5') of the locking arm (5) in the lower active position of the latter to lock the freely rotatable wheel support (11) in one position.

2.- A brake, suspension and wheel locking unit for baby carriages, according to claim 1, characterized in that the locking arms (5) on both sides of the carriage are associated with a crossbar (15), said locking arms in their lower active position abutting protuberances (16) of the frame member terminal bracket (1).

3.- A brake, suspension and wheel locking unit for baby carriages, according to claim 1, characterized in that the brake lever (10) has one of its arms extended upwardly forming up pedal (17) for operation thereof and the other forked arm thereof is provided at the ends thereof with respective locking pins (18) for the active and inactive positions of the brake on being inserted in orifices (19) of the wheel shaft support (11), said support being associated at the bottom thereof with the bushing (8) by way of the suspension spring (20).

4.- A brake, suspension and wheel locking unit for baby carriages, according to claim 1, characterised in that it is contemplated that the terminal brackets (1) of the frame members, mainly the rear ones, on one side of the carriage may be associated with those of the other side by a fairing (21) hiding the crossbars (22 and 23) disposed in this area.

Fig. 1

Fig. 2

0296091

0296091

Fig. 3